# EUROPÄISCHE PATENTSCHRIFT

(11) **EP 1 692 012 B1**
(45) Veröffentlichungstag und Bekanntmachung des Hinweises auf die Patenterteilung: **14.05.2008**
(21) Anmeldenummer: 04791096.3
(22) Anmeldetag: 30.10.2004
(51) Int. Cl.: B60R 13/08

(54) **SCHALLABSORBIERENDES HITZESCHILD**
SOUND-ABSORBING HEAT SHIELD
BOUCLIER THERMIQUE A ABSORPTION ACOUSTIQUE

(30) Priorität: 12.12.2003 DE 20319319 U
(43) Veröffentlichungstag der Anmeldung: 23.08.2006
(73) Patentinhaber: Carcoustics TechConsult GmbH, 51381 Leverkusen (DE)
(72) Erfinder: BLÖMELING, Heinz, 42799 Leichlingen (DE)
(74) Vertreter: Meyer, Hans-Joachim
(86) Internationale Anmeldenummer: PCT/EP2004/012345
(87) Internationale Veröffentlichungsnummer: WO 2005/061280

(56) Entgegenhaltungen:
- DE-A1- 19 825 762
- DE-A1- 19 925 492
- DE-U1- 9 107 484

## Beschreibung

Die Erfindung betrifft ein akustisch wirksames Hitzeschild, insbesondere für Kraftfahrzeuge, mit mindestens zwei Metallfolien, vorzugsweise aus Aluminium, die jeweils eine Vielzahl noppenartiger Prägestellen aufweisen, wobei mindestens eine der Metallfolien perforiert ist.

Aus der EP 1 149 233 B1 ist ein schallabsorbierendes Hitzeschild bekannt, das aus mindestens zwei miteinander verbundenen Aluminiumfolien besteht, von denen mindestens eine Folie eine Vielzahl von Noppen und Fissuren aufweist. Die Fissuren werden dadurch erzeugt, dass die Elastizitätsgrenze der Aluminiumfolie beim Prägen der Noppen überschritten wird, so dass sich Fissuren bilden. Zur Verbindung der Aluminiumfolien untereinander werden diese im Randbereich miteinander kaltverschweißt. Die bauliche Festigkeit dieses Folienverbundes scheint jedoch verbesserungsbedürftig zu sein, da in der EP 1 149 233 B1 vorschlagen wird, den Folienverbund mit einem Trägerblech zu ergänzen.

Ferner ist aus der DE 198 25 762 A1 ein Hitzeschild bekannt, das aus einer dreidimensional pressgeformten mehrschichtigen Metallfolienstruktur besteht. Das Hitzeschild ist aus mindestens drei übereinander gestapelten Aluminiumfolien gebildet. Mindestens zwei der Aluminiumfolien besitzen eine Dicke von höchstens 0,15 mm. Die Aluminiumfolien weisen eine Vielzahl von noppenartigen Prägungen auf, um einen Abstand zwischen den aufeinander geschichteten Aluminiumfolien sicherzustellen. Dieses Hitzeschild soll auch als akustische Abschirmung eingesetzt werden. Sein Schallabsorptionsvermögen ist allerdings eher unbefriedigend.

Der vorliegenden Erfindung liegt die Aufgabe zugrunde, ein Hitzeschild für den Einsatz in Hochtemperaturbereichen von Kraftfahrzeugen zu schaffen, das ein verbessertes Schallabsorptionsvermögen besitzt und auch ohne den Einsatz eines Trägerbleches eine hohe bauliche Festigkeit aufweist.

Diese Aufgabe wird durch ein Hitzeschild mit den Merkmalen des Anspruchs 1 sowie des Anspruchs 7 gelöst.

Das erfindungsgemäße Hitzschild ist aus mindestens zwei Metallfolien, vorzugsweise Aluminiumfolien gebildet, die jeweils eine Vielzahl noppenartiger Prägestellen aufweisen, wobei mindestens eine der Metallfolien perforiert ist. Die perforierte Metallfolie weist dabei eine Vielzahl von Löchern mit einem durchschnittlichen Lochdurchmesser im Bereich von 0,05 bis 0,9 mm auf. Die Löcher sind in einer Dichte von mindestens 15 Löchern je cm² in der Metallfolie ausgebildet, wobei die perforierte Metallfolie einseitig, vorzugsweise ganzflächig, mit einer oberhalb von 120°C wärmeaktivierbaren Klebeschicht versehen ist, die entsprechend perforiert ist. Die Metallfolien, die eine Dicke im Bereich von 50 bis 200 µm aufweisen, bilden einen selbsttragenden Verbund bilden.

Der selbsttragende Verbund kann insbesondere aus nicht mehr als drei kleberbeschichteten Metallfolien gebildet sein.

In einer ebenfalls vorteilhaften Variante ist vorgesehen, dass zwischen mindestens zwei der Metallfolien mindestens eine Schicht aus schallabsorbierendem Material angeordnet ist, die zusammen mit den Metallfolien einen selbsttragenden Verbund bildet.

Die Erfindung stellt ein Hitzeschild für Hochtemperaturbereiche eines Kraftfahrzeuges zur Verfügung, das gegenüber herkömmlichen Kraftfahrzeughitzeschilden ein wesentlich verbessertes Schallabsorptionsvermögen aufweist.
Auch ohne den Einsatz eines sonst üblichen Trägerbleches besitzt das erfindungsgemäße Hitzeschild eine hohe bauliche Festigkeit.

Weitere bevorzugte und vorteilhafte Ausgestaltungen des erfindungsgemäßen Hitzeschildes sind in den Unteransprüchen angegeben.

Nachfolgend wird die Erfindung anhand einer mehrere Ausführungsbeispiele darstellenden Zeichnung näher erläutert. Es zeigen:
- Fig. 1: eine schematische Querschnittsansicht eines Abschnittes eines Hitzeschildes gemäß einem ersten Ausführungsbeispiel der Erfindung;
- Fig. 2: eine schematische Querschnittsansicht eines Abschnittes eines Hitzeschildes gemäß einem zweiten Ausführungsbeispiel der Erfindung;
- Fig. 3: eine schematische Darstellung einer Vorrichtung zur Herstellung eines erfindungsgemäßen Hitzeschildes;
- Fig. 4: eine schematische Schnittdarstellung eines in der Vorrichtung gemäß Fig. 3 eingesetzten Formwerkzeuges im geöffneten Zustand;
- Fig. 5: eine Schnittdarstellung eines weiteren in der Vorrichtung gemäß Fig. 3 eingesetzten Formwerkzeuges im geschlossenen Zustand;
- Fig. 6: eine schematische Seitenansicht eines erfindungsgemäßen Hitzeschildes.

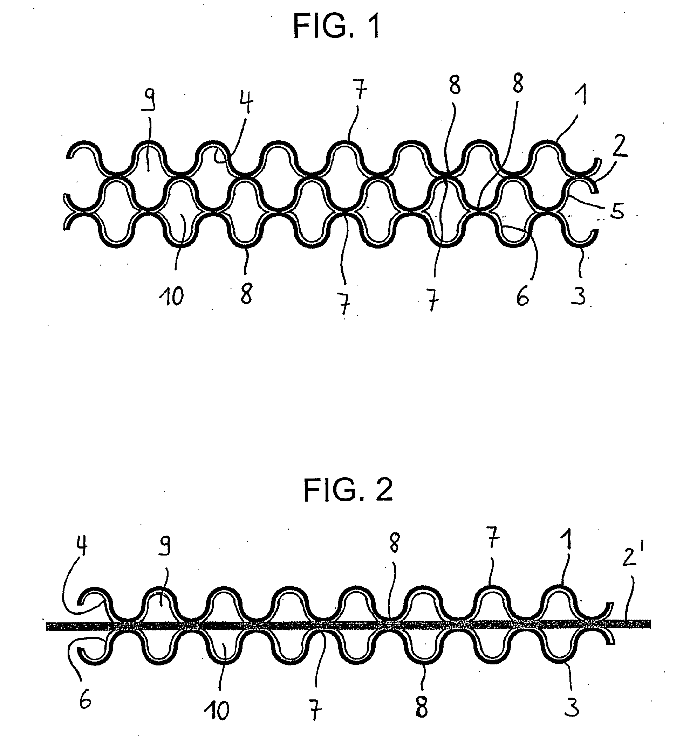

In Fig. 1 sind drei übereinanderliegende Lagen 1, 2, 3 einer mikroperforierten und geprägten Metallfolie dargestellt. Die drei Lagen bzw. Abschnitte bilden ein nicht weiter dargestelltes Hitzeschild. Das Hitzeschild weist kein Trägerblech auf, wie es zur Erzielung einer ausreichenden Biegesteifigkeit und Festigkeit bei herkömmlichen Hitzeschilden üblich ist. Bei der verwendeten Metallfolie des erfindungsgemäßen Hitzeschildes handelt es sich vorzugsweise um eine Aluminiumfolie. Die Dicke der Metall- bzw. Aluminiumfolien liegt im Bereich von 50 bis 200 µm, vorzugsweise beträgt ihre Dicke jeweils etwa 90 µm. Die Metall- bzw. Aluminiumfolien können allerdings auch unterschiedliche Dicken aufweisen. Der aus den drei Lagen 1, 2, 3 aus mikroperforierten, geprägten Metall- bzw. Aluminiumfolien gebildete Verbund hat eine Gesamtdicke im Bereich von etwa 4 bis 5 mm.

Die drei Metall- bzw. Aluminiumfolien sind jeweils einseitig und vorzugsweise ganzflächig mit einer oberhalb von 120°C, vorzugsweise oberhalb von 150°C wärmeaktivierbaren Klebeschicht 4, 5, 6 versehen, die entsprechend perforiert ist.

Die Mikroperforation der Metallfolien besteht aus einer Vielzahl von Löchern mit einem durchschnittlichen Lochdurchmesser im Bereich von 0,05 bis 0,9 mm. Die Löcher sind in einer Dichte von mindestens 15 Löchern je cm² in der Metallfolie angeordnet. Vorzugsweise beträgt die Lochdichte mindestens 20 Loch je cm². Die Perforation der mit der Klebeschicht beschichteten Metallfolie erfolgt von der nicht beschichteten Seite der Metallfolie aus, so dass der den jeweiligen Einstichkrater umgebende, von der Metallfolie vorstehende Materialrand auf der Seite der Klebeschicht liegt.

Die drei Metallfolien sind so angeordnet, dass jeweils zwei Metallfolien miteinander durch mindestens eine Klebeschicht 4, 5 bzw. 6 stoffschlüssig verbunden sind. Mindestens eine der beiden Außenseiten des Hitzeschildes, vorzugsweise beide Außenseiten sind klebeschichtfrei. Die Dicke der Klebeschicht 4, 5, 6 beträgt ca. 20 bis 30 µm, so dass sich eine Gesamtdicke für die mit der Klebeschicht beschichtete Metallfolie von beispielsweise 110 bis 120 µm ergibt. Die Klebeschicht 4, 5, 6 ist nach Aushärtung mit hohen Temperaturen belastbar. Sie ist vorzugsweise aus Polyester- und/oder Polyurethankleber gebildet.

Die Metallfolien sind geprägt und weisen jeweils eine Vielzahl noppenartiger Prägestellen 7, 8 auf. In dem in Fig. 1 dargestellten Ausführungsbeispiel sind die einzelnen Prägestellen bzw. Noppen 7, 8 im wesentlichen kalottenförmig ausgebildet. Die noppenartigen Prägestellen 7, 8 sind in einer Dichte von mindestens 100, vorzugsweise mindestens 150 Prägestellen je dm² in den Metallfolien ausgebildet. Die Prägestellen bzw. Noppen 7, 8 können anstelle einer kalottenartigen Form auch eine oder mehrere andere Formen aufweisen. Geeignet sind insbesondere auch kegelstumpfförmige, pyramidiale, pastillenförmige, quaderförmige oder zylindrische Prägestellen bzw. Noppen.

Die Prägestellen bzw. Noppen 7, 8 haben mehrere Funktionen. Erstens dienen sie als Abstandshalter zur Schaffung einer Luftschicht 9, 10 zwischen zwei benachbarten Metallfolien. Die Luftschicht 9, 10 wirkt insbesondere wärmeisolierend. Zweitens vergrößern die Prägestellen bzw. Noppen 7, 8 die Oberfläche der jeweiligen Metallfolie, was hinsichtlich der gewünschten Schallabsorption von Vorteil ist. Die Luftschicht 9 bzw. 10 zwischen den Metallfolien wirkt bei nicht zu hohen Schallfrequenzen als elastische Feder eines akustischen Feder-Masse Systems. Die schalldämpfende Wirkung des Hitzeschildes wird darüber hinaus durch die Mikroperforation seiner Metallfolien erhöht. Die Schalldämpfung erfolgt insbesondere durch Reibungseffekte in den kleinen Löchern der Metallfolien. Drittens erhöhen die Prägestellen bzw. Noppen 7, 8 die Biegesteifigkeit der Metallfolie. Die Biegesteifigkeit der Metallfolie und damit die bauliche Festigkeit des Hitzeschildes wird dabei insbesondere durch die jeweilige Klebeschicht 4, 5, 6 erhöht.

Das Prägen der mikroperforierten Metallfolie bzw. Metallfolien erfolgt mittels mindestens eines Prägewalzenpaares (nicht gezeigt), das auf seinen Mantelflächen eine Vielzahl noppenförmiger Prägeerhebungen aufweist. Die Prägeerhebungen sind vorzugsweise rasterartig auf den Mantelflächen der Prägewalzen angeordnet, wobei der Abstand zwischen zwei Prägeerhebungen auf der jeweiligen Prägewalze so gewählt ist, dass in die entsprechende Lücke eine Prägeerhebung der zugeordneten Gegenwalze eintauchen kann, ohne dass sich die Prägeerhebungen der Prägewalzen untereinander berühren. Die Spaltweite zwischen den einander zugeordneten Prägewalzen ist so gewählt, dass die Spitzen der Prägeerhebungen der einen Prägewalze die Mantelfläche der jeweiligen Gegenwalze nicht berühren. Auf diese Weise wird sichergestellt, dass sich die einander zugeordneten Prägewalzen nicht berühren und die kleinen Löcher der zuvor in der Metallfolie erzeugten Mikroperforation beim Herstellen der Prägestellen bzw. Noppen 7, 8 nicht zugedrückt und damit wieder verschlossen werden.

In dem in Fig. 1 dargestellten Ausführungsbeispiel sind die drei Lagen der Metallfolie so angeordnet, dass die nach unten weisenden Prägestellen 8 der oberen Lage 1 mit den nach oben weisenden Prägestellen 7 der mittleren Lage 2 zusammenfallen. Dementsprechend fallen die nach unten weisenden Prägestellen 8 der mittleren Lage 2 mit den nach oben weisenden Prägestellen 7 der untersten Lage 3 zusammen.

Um sicherzustellen, dass die Prägestellen der jeweiligen Metallfolie nicht in die entsprechenden Prägestellen der benachbarten Metallfolie eingreifen, was die Bildung der gewünschten Luftschicht 9 bzw. 10 zwischen den unmittelbar benachbarten Metallfolien verhindern würde, können gemäß einer in der Zeichnung nicht dargestellten Variante des erfindungsgemäßen Hitzeschildes zwei aneinanderliegende Metallfolien eine unterschiedliche Prägung aufweisen, derart, dass die eine Metallfolie ein anderes Prägemuster aufweist als die andere Metallfolie. Insbesondere können zwei aneinanderliegende Metallfolien unterschiedlich geprägt sein, derart, dass zumindest ein Teil der noppenartigen Prägestellen der einen Metallfolie jeweils einen größeren Durchmesser aufweist als die noppenartigen Prägestellen der anderen Metallfolie.

In Fig. 2 ist ein weiteres Ausführungsbeispiel eines erfindungsgemäßen Hitzeschildes dargestellt. Das Hitzeschild weist wiederum kein Trägerblech auf. Es unterscheidet sich von dem Hitzeschild gemäß Fig. 1 dadurch, dass es nur aus zwei Lagen 1, 3 einer entsprechend mikroperforierten und geprägten Metall- bzw. Aluminiumfolie gebildet ist, wobei zwischen diesen beiden Lagen 1, 3 eine Schicht 2' aus feinporösem, schallabsorbierendem Material angeordnet ist. Die Schicht 2' aus schallabsorbierendem Material weist ein Flächengewicht im Bereich von 200 bis 1200 g/m², vorzugsweise im Bereich von 250 bis 1000 g/m² auf. Das schallabsorbierende Material besteht aus einem Faservliesstoff, vorzugsweise aus Polyesterfaser- und/oder Mineralfaservliesstoff. Der Faservliesstoff enthält vorzugsweise 10 bis 30 Gew.-% Schmelzklebefasern, insbesondere Bikomponenten-Schmelzklebefasern. Die Schmelzklebefasern erhöhen die Festigkeit des Materialverbundes. Die mikroperforierten, geprägten Metall- bzw. Aluminiumfolien 1, 3 sind durch ihre jeweilige Klebeschicht 4, 6 mit der dazwischen angeordneten Schicht 2' stoffschlüssig verbunden. Der aus den Metall- bzw. Aluminiumfolien 1, 3 und der feinporösen, schallabsorbierenden Schicht 2' gebildete Verbund weist eine Gesamtdicke im Bereich von etwa 5 bis 20 mm auf.

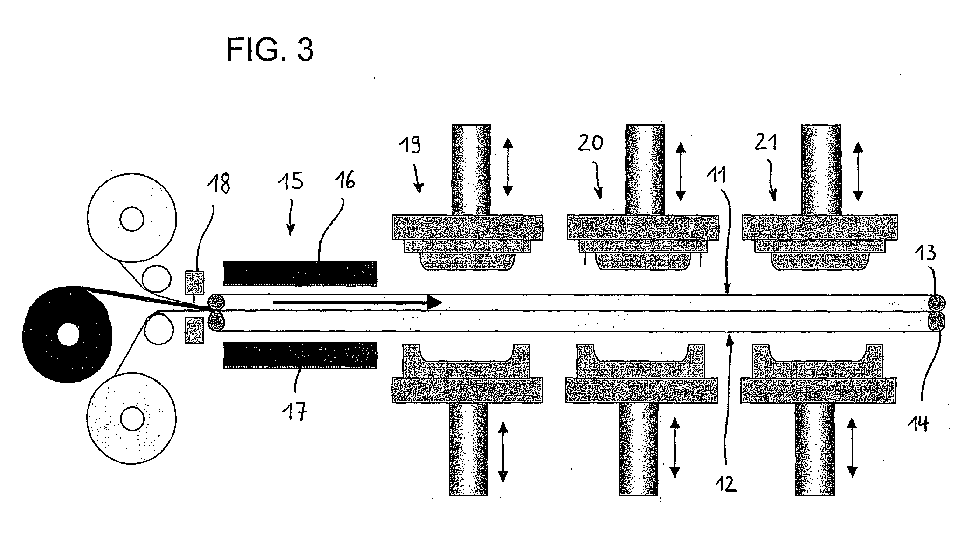

Nachfolgend wird mit Bezug auf die Figuren 3 bis 5 die Herstellung eines erfindungsgemäßen Hitzeschildes erläutert. In Fig. 3 ist eine Vorrichtung zur Herstellung des Hitzeschildes schematisch dargestellt. Die Vorrichtung umfasst eine Materialtransporteinrichtung, die aus zwei taktweise angetriebenen Endlosförderern 11 und 12, beispielsweise Kettenförderern, Riemenförderern oder dergleichen besteht. Die beiden Endlosförderer 11, 12 sind übereinander angeordnet. Die Antriebsrollen 13 und 14 werden gegensinnig angetrieben, so dass die Endlosketten oder Endlosriemen gleichsinnig umlaufen.

Drei Lagen 1, 2, 3 aus mikroperforierter, geprägter Aluminiumfolie, die einseitig mit einer wärmeaktivierbaren Klebeschicht versehen ist, bzw. zwei Lagen 1, 3 einer entsprechenden Aluminiumfolie und eine Zwischenlage 2' aus feinporösem, schallabsorbierendem Material werden von Vorratsrollen abgewickelt. Die Aluminiumfolien 1, 2, 3 bzw. 1, 3 und gegebenenfalls die Zwischenlage 2' aus feinporösem, schallabsorbierendem Material werden der Materialtransporteinrichtung zugeführt und randseitig zwischen den Endlosketten oder Endlosriemen eingeklemmt und/oder randseitig daran durch Haltemittel (nicht gezeigt) gehalten.

Einem Anfangsabschnitt der Materialtransporteinrichtung ist eine Vorheiz- und Laminierstation 15 zugeordnet, die oberhalb und unterhalb des Endlosförderers angeordnete Heizeinrichtungen 16, 17, beispielsweise in Form von Heizstrahlern aufweist. In der Vorheiz- und Laminierstation 15 werden die wärmeaktivierbare Klebeschicht der jeweiligen Aluminiumfolie 1, 2, 3 bzw. 1, 3 und gegebenenfalls in der Zwischenlage 2' enthaltende Schmelzklebefasern aktiviert bzw. aufgeschmolzen, so dass die drei Lagen 1, 2, 3 bzw. 1, 2', 3 stoffschlüssig miteinander verbunden werden.

Der Vorheiz- und Laminierstation 15 ist eine Querschneideeinrichtung 18 vorgeordnet, mit der aus den zugeführten Materialbahnen an die Abmessungen des herzustellenden Hitzschildes weitestgehend angepasste Zuschnitte erzeugt werden. In Förderrichtung gesehen folgen hinter der Vorheiz- und Laminierstation 15 mehrere aufeinander zu- und voneinander wegbewegbare Formwerkzeuge, die zumindest ein erstes Formwerkzeug 19 zum Formen eines dreidimensional ausgebildeten Hitzeschildes und mindestens ein weiteres Formwerkzeug 20 zum Beschneiden des Randes des Hitzeschildes sowie zum Herstellen von Befestigungslöchern durch entsprechendes Ausstanzen umfassen. Darüber hinaus ist vorzugsweise auch noch ein Formwerkzeug 21 zum Umbördeln des Hitzeschildrandes vorgesehen. Das Umbördeln führt zu einem glatten Hitzeschildrand. Scharfe, eine Verletzungsgefahr darstellende Ränder werden hierdurch vermieden. Zudem erhöht der umbördelte Rand die Biegesteifigkeit des Hitzeschildes.

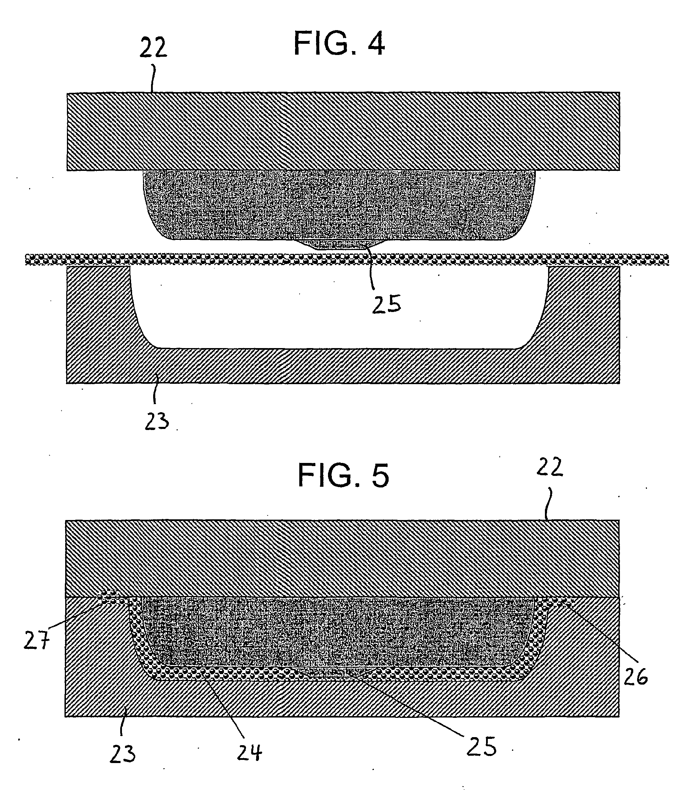

Die in Fig. 3 schematisch dargestellten Formwerkzeuge 19, 20, 21 sind in den Figuren 4 und 5 vergrößert und etwas detaillierter, jedoch wiederum nur schematisch dargestellt, wobei die rechte Hälfte der Fig. 5 dem Formwerkzeug 20 und die linke Hälfte der Fig. 5 dem Formwerkzeug 21 entspricht. Es ist zu erkennen, dass das Oberwerkzeug 22 und das Unterwerkzeug 23 im geschlossenen Zustand einen Werkzeugspalt 24 definieren. Die Spaltweite ist an die Materialkombination der miteinander stoffschlüssig verbundenen Lagen 1, 2, 3 bzw. 1, 3 angepasst, die gegebenenfalls die Zwischenlage 2' aus feinporösem, schallabsorbierendem Material umfassen kann. Die Spaltweite liegt im Bereich von etwa 3 bis 20 mm, insbesondere im Bereich von etwa 5 bis 15 mm.

An dem Oberwerkzeug 22 ist jeweils ein Vorsprung 25 ausgebildet, der eine relativ starke Verprägung eines Teilbereiches des Hitzeschildes bewirkt. Die noppenartigen Prägestellen der Metall- bzw. Aluminiumfolien werden in diesem Teilbereich, der der Anordnung eines Befestigungsloches bzw. Befestigungselements dient, flachgedrückt. Die Metall- bzw. Aluminiumfolien liegen in diesem Teilbereich nach der Verprägung ohne Abstand dicht aufeinander bzw. dicht an der Zwischenlage 2' aus feinporösem, schallabsorbierendem Material an.

Der äußere Randbereich 26, 27 der vom Oberwerkzeug 22 und Unterwerkzeug 23 definierten Kavität ist so ausgebildet, dass hier der Rand des Hitzeschildes entweder ausgestanzt (in Fig. 5 rechts dargestellt) oder umgebördelt (in Fig. 5 links dargestellt) wird.

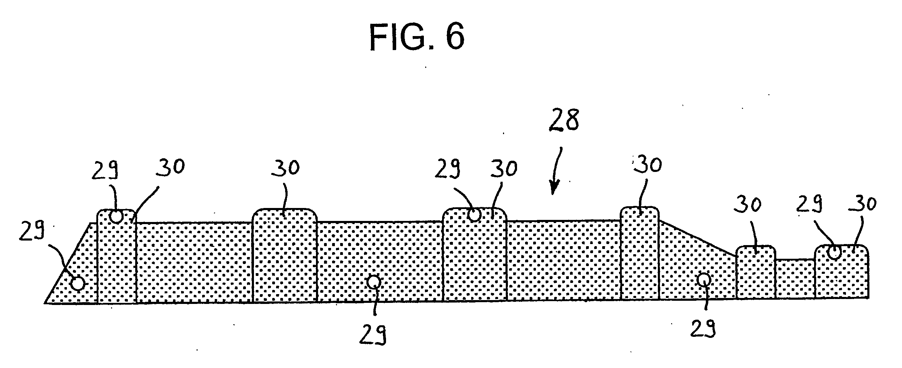

In Fig. 6 ist ein Ausführungsbeispiel eines erfindungsgemäßes Hitzeschildes 28 in Seitenansicht gezeigt. Dieses Hitzeschild ist zum Einbau im Bereich eines Auspuffstranges bestimmt. Es weist dementsprechend eine kanal- bzw. tunnelartige Form auf. In dem Hitzschild 28 sind mehrere Befestigungslöcher 29 sowie quer zu seiner Längserstreckung verlaufende, streifenförmige Versteifungsprägung bzw. Sicken 30 ausgebildet. Die Befestigungslöcher 29 sind insbesondere im Bereich der Versteifungsprägung bzw. Sicken 30 angeordnet.

Der Einsatz und die Ausgestaltung des erfindungsgemäßen Hitzeschildes ist nicht auf den Einbau im Bereich eines Auspuffstranges beschränkt. Das erfindungsgemäße Hitzeschild kann insbesondere auch motorraumseitig an einer den Motorraum vom Fahrgastraum trennenden Stirnwand angeordnet und dem abzudeckenden Stirnwandbereich entsprechend geformt werden.

## Patentansprüche

1. Akustisch wirksames Hitzeschild (28), insbesondere für Kraftfahrzeuge, mit mindestens zwei Metallfolien (1, 2 3), insbesondere aus Aluminium, die eine Dicke im Bereich von 50 bis 200 µm und eine Vielzahl noppenartiger Prägestellen (7, 8) aufweisen, wobei mindestens eine der Metallfolien (1, 2, 3) perforiert ist,
**dadurch gekennzeichnet, dass** die perforierte Metallfolie (1, 2, 3) eine Vielzahl von Löchern mit einem durchschnittlichen Lochdurchmesser im Bereich von 0,05 bis 0,9 mm aufweist, wobei die Löcher in einer Dichte von mindestens 15 Löchern je cm² in der Metallfolie angeordnet sind, und dass die perforierte Metallfolie (1, 2, 3) einseitig mit einer oberhalb von 120°C wärmeaktivierbaren Klebeschicht (4, 5, 6) versehen ist, die entsprechend perforiert ist, wobei die Metallfolien (1, 2, 3) einen selbsttragenden Verbund bilden.

2. Hitzeschild nach Anspruch 1,
**dadurch gekennzeichnet, dass** jeweils zwei Metallfolien durch mindestens eine Klebeschicht miteinander verbunden sind.

3. Hitzeschild nach Anspruch 1 oder 2,
**dadurch gekennzeichnet, dass** zwei aneinanderliegende Metallfolien unterschiedlich geprägt sind, derart, dass zumindest ein Teil der noppenartigen Prägestellen der einen Metallfolie jeweils einen größeren Durchmesser aufweist als die noppenartigen Prägestellen der anderen Metallfolie.

4. Hitzeschild nach einem der Ansprüche 1 bis 3,
**dadurch gekennzeichnet, dass** zwei aneinanderliegende Metallfolien unterschiedlich geprägt sind, derart, dass die eine Metallfolie ein anderes Prägemuster aufweist als die andere Metallfolie.

5. Hitzeschild nach einem der Ansprüche 1 bis 4,
**dadurch gekennzeichnet, dass** der selbsttragende Verbund aus nicht mehr als drei Metallfolien (1, 2, 3) gebildet ist.

6. Hitzeschild nach einem der Ansprüche 1 bis 5,
**dadurch gekennzeichnet, dass** der aus den Metallfolien gebildete Verbund eine Dicke im Bereich von 4 bis 5 mm aufweist.

7. Akustisch wirksames Hitzeschild (28), insbesondere für Kraftfahrzeuge, mit mindestens zwei Metallfolien (1, 3), insbesondere aus Aluminium, die jeweils eine Vielzahl noppenartiger Prägestellen (7, 8) aufweisen, wobei mindestens eine der Metallfolien (1, 2, 3) perforiert ist,
**dadurch gekennzeichnet, dass** die perforierte Metallfolie (1, 2, 3) eine Vielzahl von Löchern mit einem durchschnittlichen Lochdurchmesser im Bereich von 0,05 bis 0,9 mm aufweist, wobei die Löcher in einer Dichte von mindestens 15 Löchern je cm² in der Metallfolie angeordnet sind, dass die perforierte Metallfolie (1, 2, 3) einseitig mit einer oberhalb von 120°C wärmeaktivierbaren Klebeschicht (4, 5, 6) versehen ist, die entsprechend perforiert ist, und dass zwischen mindestens zwei der Metallfolien (1, 3) mindestens eine Schicht (2') aus schallabsorbierendem Material angeordnet ist, die zusammen mit den Metallfolien (1, 3) einen selbsttragenden Verbund bildet.

8. Hitzeschild nach Anspruch 7,
**dadurch gekennzeichnet, dass** die Schicht (2') aus schallabsorbierendem Material ein Flächengewicht im Bereich von 200 bis 1200 g/m² aufweist.

9. Hitzeschild nach Anspruch 7 oder 8,
**dadurch gekennzeichnet, dass** das schallabsorbierende Material aus einem Faservliesstoff, vorzugsweise aus Polyesterfaser- und/oder Mineralfaservliesstoff besteht.

10. Hitzeschild nach Anspruch 9,
**dadurch gekennzeichnet, dass** der Faservliesstoff 10 bis 30 Gew.-% Schmelzklebefasern, vorzugsweise Bikomponenten-Schmelzklebefasern enthält.

11. Hitzeschild nach einem der Ansprüche 7 bis 10,
**dadurch gekennzeichnet, dass** die Klebeschicht (4, 6) die perforierte Metallfolie mit der Schicht (2') aus schallabsorbierendem Material verbindet.

12. Hitzeschild nach einem der Ansprüche 7 bis 11,
**dadurch gekennzeichnet, dass** der selbsttragende Verbund aus nicht mehr als zwei Metallfolien (1, 3) und nicht mehr als einer Schicht (2') des schallabsorbierenden Materials gebildet ist.

13. Hitzeschild nach einem der Ansprüche 1 bis 12,
**dadurch gekennzeichnet, dass** die noppenartigen Prägestellen (7, 8) in einer Dichte von mindestens 100 Prägestellen, insbesondere mindestens 150 Prägestellen je dm² in den Metallfolien (1, 2, 3) ausgebildet sind.

14. Hitzeschild nach einem der Ansprüche 1 bis 13,
**dadurch gekennzeichnet, dass** die Lochdichte in der perforierten Metallfolie (1, 2, 3) mindestens 20 Löcher je cm² beträgt.

15. Hitzeschild nach einem der Ansprüche 1 bis 14,
**dadurch gekennzeichnet, dass** die Metallfolien (1, 2, 3) jeweils eine Dicke im Bereich von 50 und 110 µm aufweisen.

16. Hitzeschild nach einem der Ansprüche 1 bis 15,
**dadurch gekennzeichnet, dass** die Klebeschicht eine Dicke im Bereich von 20 bis 30 µm aufweist.

17. Hitzeschild nach einem der Ansprüche 1 bis 16,
**dadurch gekennzeichnet, dass** die mit der Klebeschicht (4, 5, 6) versehene Metallfolie (1, 2, 3) jeweils ganzflächig mit der Klebeschicht (4, 5, 6) versehen ist.

18. Hitzeschild nach einem der Ansprüche 1 bis 17,
**dadurch gekennzeichnet, dass** die Klebeschicht (4, 5, 6) aus Polyester- und/oder Polyurethankleber gebildet ist.

19. Hitzeschild nach einem der Ansprüche 1 bis 18,
**dadurch gekennzeichnet, dass** die Metallfolien (1, 2, 3) jeweils mikroperforiert und/oder jeweils einseitig mit einer oberhalb von 120°C wärmeaktivierbaren Klebeschicht (4, 5, 6) versehen sind.

20. Hitzeschild nach einem der Ansprüche 1 bis 19,
**dadurch gekennzeichnet, dass** dessen Außenseiten klebeschichtfrei sind.

21. Hitzeschild (28) nach einem der Ansprüche 1 bis 20,
**dadurch gekennzeichnet, dass** es eine kanalförmige Form mit mindestens einer quer zu seiner Längserstreckung verlaufenden, streifenförmigen Versteifungsprägung oder Sicke (30) aufweist.

## Claims

1. Acoustically effective heat shield (28), particularly for motor vehicles, having at least two metal foils (1, 2, 3), particularly made from aluminium, that have a thickness in the range from 50 to 200 µm and a plurality of knob-like embossed points (7, 8), wherein at least one of the metal foils (1, 2, 3) is perforated,
**characterised in that** the perforated metal foil (1, 2, 3) is furnished with a plurality of holes having an average hole diameter in the range from 0.05 to 0.9 mm, wherein the holes are arranged in a density of at least 15 holes per cm² in the metal foil, and that the perforated metal foil (1, 2, 3) is provided on one side with an adhesive layer (4, 5, 6) that is activatable by heating above 120°C, and which is correspondingly perforated, wherein the metal foils (1, 2, 3) form a self-supporting composite.

2. The heat shield according to claim 1,
**characterised in that** two metal foils are each bonded with one another by at least one adhesive layer.

3. The heat shield according to claim 1 or 2,
**characterised in that** two adjacent metal foils are differently embossed such that at least a part of the knob-like embossed points on the one metal foil each have a larger diameter than the knob-like embossed points on the other metal foil.

4. The heat shield according to any of claims 1 to 3,
**characterised in that** two metal foils lying on each other are differently embossed such that the one metal foil has a different embossed pattern than the other metal foil.

5. The heat shield according to any of claims 1 to 4,
**characterised in that** the self-supporting composite is formed from not more than three metal foils (1, 2, 3).

6. The heat shield according to any of claims 1 to 5,
**characterised in that** the composite formed from metal foils has a thickness in the range from 4 to 5 mm.

7. Acoustically effective heat shield (28), particularly for motor vehicles, having at least two metal foils (1, 3), particularly made from aluminium, each of which has a plurality of knob-like embossed points (7, 8), wherein at least one of the metal foils (1, 2, 3) is perforated,
**characterised in that** the perforated metal foil (1, 2, 3) has a plurality of holes with an average hole diameter in the range from 0.05 to 0.9 mm, wherein the holes are arranged in a density of at least 15 holes per cm² in the metal foil, that the perforated metal foil (1, 2, 3) is provided on one side with an adhesive layer (4, 5, 6) that is activatable by heating above 120°C, and which is correspondingly perforated, and that at least one layer (2') of sound absorbing material is arranged between at least two of the metal foils (1, 3), which layer forms a self-supporting bond with the metal foils (1, 3).

8. The heat shield according to claim 7,
**characterised in that** the layer (2') made from sound absorbing material has a mass per unit area in the range from 200 to 1200 g/m².

9. The heat shield according to claim 7 or 8,
**characterised in that** the sound absorbing material is made from a fibrous web material, preferably a polyester and/or mineral fibrous web material.

10. The heat shield according to claim 9,
**characterised in that** the fibrous web material contains 10 to 30 percent by weight hotmelt adhesive fibres, preferably bicomponent hotmelt adhesive fibres.

11. The heat shield according to any of claims 7 to 10,
**characterised in that** the adhesive layer (4, 6) bonds the perforated metal foil to the layer (2') made from sound absorbing material.

12. The heat shield according to any of claims 7 to 11,
**characterised in that** the self-supporting composite is formed from not more than two metal foils (1, 3) and not more than one layer (2') of the sound absorbing material.

13. The heat shield according to any of claims 1 to 12,
**characterised in that** the knob-like embossed points (7, 8) are formed in the metal foils (1, 2, 3) in a density of at least 100 embossed points, particularly in a density of at least 150 embossed points per dm².

14. The heat shield according to any of claims 1 to 13,
**characterised in that** the hole density in the perforated metal foil (1, 2, 3) is at least 20 holes per cm².

15. The heat shield according to any of claims 1 to 14,
**characterised in that** the metal foils (1, 2, 3) each have a thickness in the range from 50 to 110 µm.

16. The heat shield according to any of claims 1 to 15,
**characterised in that** the adhesive layer has a thickness in the range from 20 to 30 µm.

17. The heat shield according to any of claims 1 to 16,
**characterised in that** the metal foil (1, 2, 3) provided with the adhesive layer (4, 5, 6) is provided with the adhesive layer (4, 5, 6) over the entire surface thereof in each case.

18. The heat shield according to any of claims 1 to 17,
**characterised in that** the adhesive layer (4, 5, 6) is made from polyester adhesive and/or polyurethane adhesive.

19. The heat shield according to any of claims 1 to 18,
**characterised in that** the metal foils (1, 2, 3) are each microperforated and/or are provided on one side with an adhesive layer (4, 5, 6) that is activatable by heating above 120°C.

20. The heat shield according to any of claims 1 to 19,
**characterised in that** the outer sides thereof are not coated with an adhesive layer.

21. The heat shield (28) according to any of claims 1 to 20,
**characterised in that** it has a channel-like shape with at least one strip-like embossment for rigidity or corrugation (30) running transversely to its longitudinal extension.

## Revendications

1. Bouclier thermique (28) à effet acoustique, en particulier pour véhicules automobiles, qui présente au moins deux feuilles métalliques (1, 2, 3), en particulier en aluminium, dont l'épaisseur est comprise dans la plage de 50 à 200 µm et qui sont dotées d'emplacements gaufrés (7, 8) en forme de calotte, au moins l'une des feuilles métalliques (1, 2, 3) étant perforée,
**caractérisé en ce que**
la feuille métallique perforée (1, 2, 3) présente des trous d'un diamètre moyen compris dans la plage de 0,05 à 0,9 mm, les trous étant ménagés dans la feuille métallique à une densité d'au moins 15 trous par cm², et **en ce que** la feuille métallique perforée (1, 2, 3) est dotée sur une face d'une couche d'adhésif (4, 5, 6) activée par une température supérieure à 120°C et perforée de manière correspondante, les feuilles métalliques (1, 2, 3) formant un composite autoportant.

2. Bouclier thermique selon la revendication 1, **caractérisé en ce que** deux feuilles métalliques sont reliées l'une à l'autre par au moins une couche d'adhésif.

3. Bouclier thermique selon les revendications 1 ou 2, **caractérisé en ce que** deux feuilles métalliques adjacentes sont gaufrées différemment de telle sorte qu'au moins certains des emplacements gaufrés en calotte d'une des feuilles métalliques présentent un diamètre plus grand que les emplacements gaufrés en forme de calotte de l'autre feuille métallique.

4. Bouclier thermique selon les revendications 1 à 3, **caractérisé en ce que** deux feuilles métalliques adjacentes sont gaufrées différemment de telle sorte qu'une des feuilles métalliques présente un autre motif de frappe que l'autre feuille métallique.

5. Bouclier thermique selon les revendications 1 à 4, **caractérisé en ce que** le composite autoportant est formé d'au plus trois feuilles métalliques (1, 2, 3).

6. Bouclier thermique selon les revendications 1 à 5, **caractérisé en ce que** le composite formé par les feuilles métalliques a une épaisseur comprise dans la plage de 4 à 5 mm.

7. Bouclier thermique (28) à effet acoustique, en particulier pour véhicules automobiles, qui présente au moins deux feuilles métalliques (1, 3), en particulier en aluminium, toutes deux dotées d'emplacements gaufrés (7, 8) en forme de calotte, au moins une des feuilles métalliques (1, 2, 3) étant perforée,
**caractérisé en ce que**
la feuille métallique perforée (1, 2, 3) présente des trous d'un diamètre moyen compris dans la plage de 0,05 à 0,9 mm, les trous étant ménagés dans la feuille métallique à une densité d'au moins 15 trous par cm², **en ce que** la feuille métallique perforée (1, 2, 3) est dotée sur une face d'une couche d'adhésif (4, 5, 6) activée à une température supérieure à 120°C et perforée de manière appropriée et **en ce qu'**au moins une couche (2') de matériau absorbant le son est disposée entre au moins deux des feuilles métalliques (1, 3), et forme avec les feuilles métalliques (1, 3) un composite autoportant.

8. Bouclier thermique selon la revendication 7, **caractérisé en ce que** la couche (2') en matériau absorbant le son présente une masse par unité de surface comprise dans la plage de 200 à 1 200 g/m².

9. Bouclier thermique selon les revendications 7 ou 8, **caractérisé en ce que** le matériau absorbant le son est constitué d'une toison de fibres, de préférence d'une toison de fibres de polyester et/ou de fibres minérales.

10. Bouclier thermique selon la revendication 9, **caractérisé en ce que** la toison de fibres contient de 10 à 30 % en poids de fibres adhésives à l'état fondu et de préférence de fibres adhésives à l'état fondu et à deux composants.

11. Bouclier thermique selon l'une des revendications 7 à 10, **caractérisé en ce que** la couche d'adhésif (4, 6) relie la feuille métallique perforée à la couche (2') de matériau absorbant le son.

12. Bouclier thermique selon l'une des revendications 7 à 11, **caractérisé en ce que** le composite autoportant est formé d'au plus deux feuilles métalliques (1, 3) et d'au plus une couche (2') de matériau absorbant le son.

13. Bouclier thermique selon l'une des revendications 1 à 12, **caractérisé en ce que** les emplacements gaufrés (7, 8) en forme de calotte sont formés dans les feuilles métalliques (1, 2, 3) à une densité d'au moins 100 emplacements gaufrés et en particulier d'au moins 150 emplacements gaufrés par dm².

14. Bouclier thermique selon l'une des revendications 1 à 13, **caractérisé en ce que** la densité de trous dans la feuille métallique perforée (1, 2, 3) est d'au moins 20 trous par cm².

15. Bouclier thermique selon l'une des revendications 1 à 14, **caractérisé en ce que** les feuilles métalliques (1, 2, 3) présentent chacune une épaisseur comprise dans la plage de 50 à 110 µm.

16. Bouclier thermique selon l'une des revendications 1 à 15, **caractérisé en ce que** la couche d'adhésif présente une épaisseur comprise dans la plage de 20 à 30 µm.

17. Bouclier thermique selon l'une des revendications 1 à 16, **caractérisé en ce que** la feuille métallique (1, 2, 3) dotée de la couche d'adhésif (4, 5, 6) est dotée de la couche d'adhésif (4, 5, 6) sur toute sa surface.

18. Bouclier thermique selon l'une des revendications 1 à 17, **caractérisé en ce que** la couche d'adhésif (4, 5, 6) est formée d'un adhésif au polyester et/au au polyuréthane.

19. Bouclier thermique selon l'une des revendications 1 à 18, **caractérisé en ce que** les feuilles métalliques (1, 2, 3) sont microperforées et/ou sont dotées sur une face d'une couche d'adhésif (4, 5, 6) activée à une température supérieure à 120°C.

20. Bouclier thermique selon l'une des revendications 1 à 19, **caractérisé en ce que** ses côtés extérieurs sont exempts de couche d'adhésif.

21. Bouclier thermique (28) selon l'une des revendications 1 à 20, **caractérisé en ce qu'**il présente la forme d'un canal doté d'au moins une gaufrage de renforcement ou une empreinte (30) en forme de bande qui s'étend transversalement au sens de sa longueur.
